# FASCICULE DE BREVET EUROPEEN

(11) **EP 1 184 249 B1**
(45) Date de publication et mention de la délivrance du brevet: **22.06.2005**
(21) Numéro de dépôt: 01402158.8
(22) Date de dépôt: 10.08.2001
(51) Int. Cl.: B61D 17/04, B62D 31/02

(54) **Caisse de véhicule ferroviaire**
Wagenkasten eines Schienenfahrzeugs
Body of a railway vehicle

(30) Priorité: 30.08.2000 FR 0011091
(43) Date de publication de la demande: 06.03.2002
(73) Titulaire: ALSTOM, 92300 Levallois-Perret (FR)
(72) Inventeur: Campus, Emigliano, 17340 Yves Bourg (FR)
(74) Mandataire: de Lambilly Delorme, Marie Pierre

(56) Documents cités:
- EP-A- 0 260 200
- EP-A- 0 818 373
- EP-A- 0 926 036
- DE-A- 19 606 792
- US-A- 5 066 067

## Description

L'invention concerne les véhicules ferroviaires et plus particulièrement une caisse de véhicule ferroviaire.

La construction conventionnelle des véhicules ferroviaires et notamment des voitures des rames ferroviaires, et plus particulièrement leur montage en série, implique la réalisation d'un « chaudron » entièrement soudé; ou, comme le décrit le brevet EP0926036 reflétant l'état de la technique le plus proche, la réalisation d'une structure hybride de caisse comprenant un ensemble châssis, deux faces garnies et un ensemble pavillon *;* puis la fixation d'éléments d'isolation et d'éléments de câblage pour le transfert des fluides (eau, fluides de chauffage ou/et de refroidissement, fluides de commande notamment d'automatismes) et de l'énergie électrique, et enfin, la pose d'un garnissage. Il résulte de ces processus de construction, un temps de fabrication long, et des coûts d'outillage élevés.

En outre, les liaisons des montants des portes et des baies posent des problèmes de dimensionnement car elles doivent présenter une excellente fiabilité en dépit des fatigues dues aux efforts intenses et répétés auxquels elles sont exposées. Plus particulièrement, les liaisons par soudures sont extrêmement sensibles à ces efforts.

L'invention a pour but de remédier à ces inconvénients en réduisant le temps d'assemblage et les coûts d'outillage.

L'invention a également pour but de créer une structure de caisse de véhicule ferroviaire permettant d'allier un bon aérodynamisme, un aspect esthétique, et une masse allégée facilitant la répartition des équipements si l'on souhaite construire une rame à motorisation répartie.

A cette fin, l'invention concerne une caisse de véhicule présentant une structure hybride comprenant un « ensemble châssis » métallique en aluminium ou en alliage d'aluminium, un « ensemble pavillon » en aluminium ou en alliage d'aluminium et deux « ensembles face garnie » en matériau composite fixés chacun à l'ensemble châssis et à l'ensemble pavillon caractérise en ce que l'ensemble châssis (1) comporte un plancher et deux panneaux de brancard s'étendant depuis le plancher en direction de l'ensemble pavillon de manière que la section transversale de l'ensemble châssis présente une forme générale en U.

Grâce au fait que l'on utilise l'habillage des faces comme élément d'assemblage de la structure de caisse, on offre la possibilité d'une préfabrication du véhicule, et on obtient une simplification et une plus grande rapidité de montage en intégrant des sous-ensembles déjà pré-équipes ; il est également rendu possible d'intégrer des vitrages en continu améliorant l'esthétique du véhicule.

La caisse peut en outre présenter une ou plusieurs des caractéristiques suivantes :
- les panneaux de brancard comportent chacun un bas de face coudé à angle obtus et raccordé au plancher ;
- l'ensemble pavillon comporte un panneau de toit présentant une région centrale et deux régions latérales s'étendant de part et d'autre de cette région centrale, inclinées en direction de l'ensemble châssis en s'éloignant de la région centrale ;
- chaque ensemble face garnie comporte une face en matériau composite disposée en vis-à-vis d'un panneau de brancard de l'ensemble châssis, un bandeau en matériau composite disposé en vis-à-vis d'une région latérale de l'ensemble pavillon, et des montants en matériau composite reliant la face au bandeau ;
- la face en matériau composite s'étend au moins partiellement à l'intérieur de l'ensemble châssis ;
- le bandeau en matériau composite s'étend au moins partiellement à l'intérieur de l'ensemble pavillon ;
- les ensembles face garnie comportent des faces respectives en matériau composite comprenant une bande supérieure s'étendant vers l'extérieur en vis-à-vis d'un chant supérieur de l'ensemble châssis, cette bande supérieure étant fixée à ce chant par des vis ;
- les ensembles face garnie comportent des bandeaux fixés chacun à une région latérale de l'ensemble pavillon par des vis ;
- les ensembles face garnie comportent des faces en matériau composite comprenant une bande inférieure s'étendant vers l'intérieur en vis-à-vis d'un bas de face coudé de panneaux de brancard, et cette bande est fixée à ce bas de face par des vis ;
- les ensembles face garnie comportent des cadres de portes ;
- les ensembles face garnie comportent des supports de sièges.
- la caisse comporte des vitrages fixés aux ensembles face garnie ;
- elle comporte des panneaux d'isolation entre des panneaux de brancard appartenant à l'ensemble châssis et des faces appartenant aux ensembles face garnie ;
- l'ensemble châssis comporte un plancher comprenant au moins un profil multi-tubulaire en aluminium ou en alliage d'aluminium ;
- l'ensemble châssis comporte un plancher comprenant des traverses en aluminium ou en alliage d'aluminium ;
- l'ensemble châssis comporte des panneaux de brancard comprenant au moins un profil multi-tubulaire en aluminium ou en alliage d'aluminium ;
- l'ensemble pavillon comporte au moins un profil multi-tubulaire en aluminium ou en alliage d'aluminium ; et
- l'ensemble châssis et l'ensemble pavillon comportent des profils multi-tubulaires où s'étendent des alvéoles dans lesquelles sont logés des moyens formant écrous pour la fixation des ensembles face garnie par boulonnage.

D'autres caractéristiques et avantages de l'invention ressortiront de la description qui va suivre, d'une forme de réalisation de l'invention donnée à titre d'exemple non limitatif, illustrée par les dessins joints dans lesquels :
- la figure 1 est une vue schématique en perspective « explosée » d'un tronçon de caisse de véhicule selon l'invention ; et
- la figure 2 montre schématiquement un exemple d'agencement d'une liaison d'un ensemble face garnie avec l'ensemble châssis ou l'ensemble pavillon dans une caisse de véhicule selon la figure 1, en coupe par un plan transversal au véhicule.

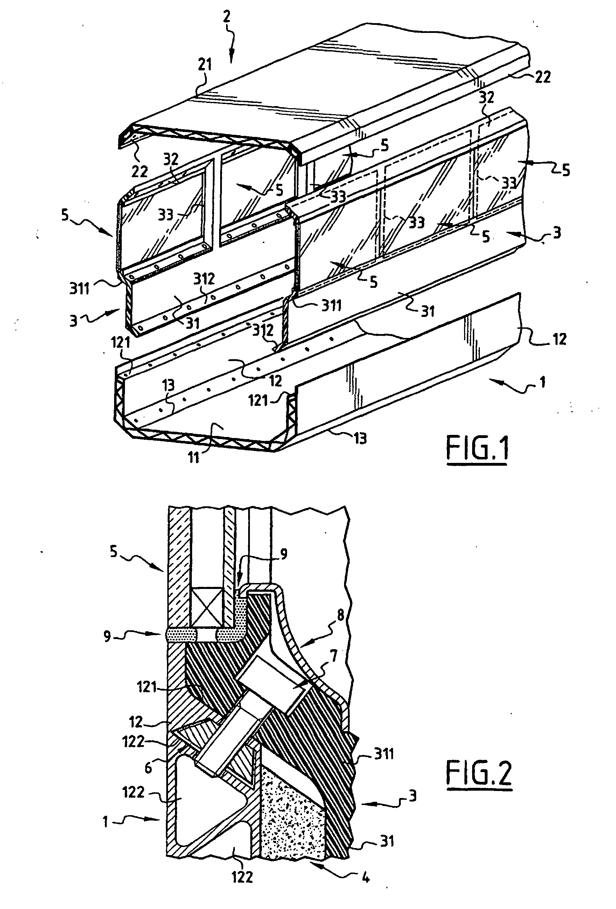

Le tronçon de caisse de véhicule représenté sur la figure 1 est un « chaudron » présentant une structure hybride, comprenant un « ensemble châssis » 1 métallique, par exemple en aluminium ou en alliage d'aluminium, un « ensemble pavillon » 2 également métallique pouvant être en aluminium ou en alliage d'aluminium, et deux ensembles « face garnie » 3 en matériau connu sous le nom de « matériau composite » fixés chacun à l'ensemble châssis et à l'ensemble pavillon.

L'ensemble châssis 1 comporte un plancher 11 pouvant être constitué soit de traverses soit de profils multi-tubulaires, et un brancard comportant deux panneaux 12 constitués de profils multi-tubulaires et s'étendant depuis le plancher vers le haut en direction de l'ensemble pavillon, de manière que la section transversale de l'ensemble châssis présente une forme générale en U. Les panneaux 12 comportent des bas de face coudés à angle obtus, par exemple à 135° dont le bord inférieur 13 est raccordé au plancher 11.

L'ensemble pavillon 2 est également constitué d'au moins un profil multi-tubulaire en aluminium ou en alliage d'aluminium ; il comporte un panneau de toit présentant une région centrale 21 et deux régions latérales 22 s'étendant de part et d'autre de cette région centrale, inclinées vers le bas en direction de l'ensemble châssis 1 en s'éloignant de la région centrale 21 ; ces régions 22 sont par exemple coudées à angle obtus par rapport à la région centrale.

Les ensembles face garnie 3 en matériau composite comportent chacun une face 31 disposée en vis-à-vis d'un panneau 12 du brancard de l'ensemble châssis 1, et un bandeau 32 disposé en vis-à-vis d'une région latérale 22 respective de l'ensemble pavillon 2 ; il intègre des montants 33 reliant la face 31 au bandeau 32.

La face 31 disposée en vis-à-vis d'un panneau 12 du brancard s'étend à l'intérieur de l'ensemble châssis 1, et elle est séparée de ce panneau 12 par une isolation thermique et acoustique constituée par exemple par des panneaux d'isolation 4 (figure 2). De même, le bandeau 32 disposé en vis-à-vis d'une région latérale 22 de l'ensemble pavillon 2 s'étend à l'intérieur de cet ensemble pavillon et est séparé de cette région latérale par une isolation similaire.

La face 31 disposée en vis-à-vis d'un panneau 12 de brancard comporte une bande supérieure 311 s'étendant vers l'extérieur en vis-à-vis d'un chant supérieur 121 en biseau de l'ensemble châssis, à partir de laquelle s'étendent les montants 33 ; cette bande 311 est fixée à ce chant 121 par boulonnage, notamment par des vis comme on le verra dans la suite. Elle comporte également une bande inférieure 312 s'étendant vers l'intérieur en vis-à-vis d'un bas de face coudé des panneaux 12 de brancard, fixée au bas de face par boulonnage, notamment par vis.

De même, les bandeaux 32 sont fixés chacun à une région latérale 22 de l'ensemble pavillon 2 de manière similaire.

Les ensembles face garnie 3 intègrent également des cadres de portes, des supports de sièges, et le garnissage de face, de telle manière que peuvent être fixés aux ensembles face garnie 3, des baies 5 et/ou des vitrages en continu.

Le dispositif de liaison représenté sur la figure 2 est un dispositif de boulonnage par lequel la bande supérieure 311 d'une face 31 d'un ensemble face garnie 3 est fixée à un chant supérieur 121 d'un panneau 12 de brancard ; les autres dispositifs de liaison de l'ensemble face garnie 3 à l'ensemble châssis 1 et à l'ensemble pavillon 2 peuvent être analogues à celui-ci.

Comme on l'a vu, les panneaux 12 du brancard comportent de préférence des profils multi-tubulaires ; à l'intérieur de ces panneaux 12, s'étendent des alvéoles 122 dont l'une (la plus proche du chant) est garnie de loin en loin d'écrous 6, ou d'une barrette comportant de loin en loin des zones percées d'un trou taraudé formant écrous 6, écrous de préférence approximativement régulièrement espacés ; la bande 311 de la face 31 est percée en vis-à-vis des écrous 6, de trous lisses pour le passage de vis 7 en prise avec les écrous ; les têtes de vis sont noyées dans des lamages de la bande supérieure 311 ; le chant 121 du brancard est ici biseauté à 45° environ ; dans le cas d'écrous 6 séparés, ceux-ci peuvent présenter une forme prismatique épousant approximativement la forme de l'alvéole 122 dans laquelle ils sont logés, afin de ne pas être entraînés en rotation lors de la rotation de la vis correspondante ; les têtes des vis 7 sont cachées par des bandes métalliques 8. On voit également sur la figure 2 le haut de panneaux d'isolation 4, et le bas d'un double vitrage 5 collé par des cordons de mastic isolant 9 visibles ici à la partie supérieure du brancard et contre l'ensemble face garnie 3.

Il résulte de cette conception une simplification notable du chaudron, une suppression des zones sensibles au niveau des angles des vitrages, une réduction du temps d'assemblage du chaudron (mise en place des baies au stade sous-ensemble, simplification et réduction du temps de montage, possibilité de montage à plat donc de robotisation du montage, et immobilisation réduite du chaudron), une possibilité d'intégrer du câblage et de l'isolation au stade de la réalisation du sous-ensemble, une possibilité de pré-équiper le châssis et le pavillon, une possibilité de modification de la présentation du véhicule (par exemple en changeant le nombre de vitrages ou/et de baies), ainsi qu'une possibilité de vitrage en continu.

Bien entendu, l'invention n'est pas limitée aux formes de réalisation ci-dessus décrites et représentées, et on pourra en prévoir d'autres sans sortir de son cadre.

## Revendications

1. Caisse de véhicule présentant une structure hybride comprenant un « ensemble châssis» (1) métallique en aluminium ou en alliage d'aluminium, un « ensemble pavillon » (2) en aluminium ou en alliage d'aluminium et deux « ensembles face garnie » (3) en matériau composite fixés chacun à l'ensemble châssis (1) et à l'ensemble pavillon (2) **caractérisée en ce que** l'ensemble châssis (1) comporte un plancher (11) et deux panneaux (12) de brancard s'étendant depuis le plancher en direction de l'ensemble pavillon (2) de manière que la section transversale de l'ensemble châssis (1) présente une forme générale en U.

2. Caisse de véhicule selon la revendication 1, **caractérisée en ce que** les panneaux (12) de brancard comportent chacun un bas de face coudé à angle obtus et raccordé au plancher (11).

3. Caisse de véhicule selon la revendication 1 ou 2, **caractérisée en ce que** l'ensemble pavillon (2) comporte un panneau de toit présentant une région centrale (21) et deux régions latérales (22) s'étendant de part et d'autre de cette région centrale, inclinées en direction de l'ensemble châssis (1) en s'éloignant de la région centrale (21).

4. Caisse de véhicule selon l'une quelconque des revendications 1 à 34, **caractérisée en ce que** chaque ensemble face garnie (3) comporte une face (31) en matériau composite disposée en vis-à-vis d'un panneau (12) de brancard de l'ensemble châssis (1), un bandeau (32) en matériau composite disposé en vis-à-vis d'une région latérale (22) de l'ensemble pavillon (2), et des montants (33) en matériau composite reliant la face (31) au bandeau (32).

5. Caisse de véhicule selon la revendication 4, **caractérisée en ce que** la face (31) en matériau composite s'étend au moins partiellement à l'intérieur de l'ensemble châssis (1).

6. Caisse de véhicule selon la revendication 5, **caractérisée en ce que** le bandeau (32) en matériau composite s'étend au moins partiellement à l'intérieur de l'ensemble pavillon (2).

7. Caisse de véhicule selon l'une quelconque des revendications 1 à 6, **caractérisée en ce que** les ensembles face garnie (3) comportent des faces (31) respectives en matériau composite comprenant une bande supérieure (311) s'étendant vers l'extérieur en vis-à-vis d'un chant supérieur (121) de l'ensemble châssis (1), cette bande supérieure (311) étant fixée à ce chant (121) par des vis (7).

8. Caisse de véhicule selon l'une quelconque des revendications 1 à 7, **caractérisée en ce que** les ensembles face garnie (3) comportent des bandeaux (32) fixés chacun à une région latérale (22) de l'ensemble pavillon (2) par des vis.

9. Caisse de véhicule selon l'une quelconque des revendications 1 à 6, **caractérisée en ce que** les ensembles face garnie (3) comportent des faces (31) en matériau composite comprenant une bande inférieure (312) s'étendant vers l'intérieur en vis-à-vis d'un bas de face coudé de panneaux (12) de brancard, et cette bande (312) est fixée à ce bas de face par des vis.

10. Caisse de véhicule selon l'une quelconque des revendications 1 à 9, **caractérisée en ce que** les ensembles face garnie (3) comportent des cadres de portes.

11. Caisse de véhicule selon l'une quelconque des revendications 1 à 10, **caractérisée en ce que** les ensembles face garnie (3) comportent des supports de sièges.

12. Caisse de véhicule selon l'une quelconque des revendications 1 à 11, **caractérisée en ce qu'**elle comporte des vitrages (5) fixés aux ensembles face garnie (3).

13. Caisse de véhicule selon l'une quelconque des revendications 1 à 12, **caractérisée en ce qu'**elle comporte des panneaux d'isolation (4) entre des panneaux (12) de brancard appartenant à l'ensemble châssis (1) et des faces (31) appartenant aux ensembles face garnie (3).

14. Caisse de véhicule selon l'une quelconque des revendications 1 à 13, **caractérisée en ce que** l'ensemble châssis (1) comporte un plancher (11) comprenant au moins un profil multi-tubulaire en aluminium ou en alliage d'aluminium.

15. Caisse de véhicule selon l'une quelconque des revendications 1 à 14, **caractérisée en ce que** l'ensemble châssis (1) comporte un plancher comprenant des traverses en aluminium ou en alliage d'aluminium.

16. Caisse de véhicule selon l'une quelconque des revendications 1 à 15, **caractérisée en ce que** l'ensemble châssis (1) comporte des panneaux (12) de brancard comprenant au moins un profil multi-tubulaire en aluminium ou en alliage d'aluminium.

17. Caisse de véhicule selon l'une quelconque des revendications 1 à 16, **caractérisée en ce que** l'ensemble pavillon (2) comporte au moins un profil multi-tubulaire en aluminium ou en alliage d'aluminium.

18. Caisse de véhicule selon l'une quelconque des revendications 1 à 17, **caractérisée en ce que** l'ensemble châssis (1) et l'ensemble pavillon (2) comportent des profils multi-tubulaires où s'étendent des alvéoles (122) dans lesquelles sont logés des moyens formant écrous (6) pour la fixation des ensembles face garnie (3) par boulonnage.

## Patentansprüche

1. Wagenkasten mit einer Hybridstruktur, der eine «Vorrichtung mit einem Metallrahmen» (1) aus Aluminium oder aus einer Aluminiumlegierung, eine «Dacheinheit» (2) aus Aluminium oder aus einer Aluminiumlegierung und zwei «ausgekleidete Seitenflächen» (3) aus Verbundwerkstoff besitzt, die jeweils an der Vorrichtung mit einem Metallrahmen (1) und an der Dacheinheit (2) befestigt sind, **dadurch gekennzeichnet, dass** die Vorrichtung mit einem Metallrahmen (1) einen Boden (11) und zwei Längsträger (12) besitzt, die derart vom Boden in Richtung Dacheinheit (2) verlaufen, dass der Querschnitt der Vorrichtung mit einem Metallrahmen allgemein U-Form hat.

2. Wagenkasten nach Anspruch 1, **dadurch gekennzeichnet, dass** die Längsträger (12) jeweils eine in einem stumpfen Winkel gebogene untere Seite besitzen, die mit dem Boden verbunden ist

3. Wagenkasten nach Anspruch 1 oder 2, **dadurch gekennzeichnet, dass** die Dacheinheit (2) eine Dachplatte mit einem mittleren Bereich (21) und zwei seitlichen Bereichen (22) besitzt, die sich zu beiden Seiten dieses mittleren Bereichs erstrecken, und die in Richtung der Vorrichtung mit einem Metallrahmen (1) geneigt sind, indem sie sich von dem mittleren Bereich (21) entfernen.

4. Wagenkasten nach einem der Ansprüche 1 bis 3, **dadurch gekennzeichnet, dass** jede ausgekleidete Seitenfläche (3) eine Front (31) aus Verbundwerkstoff besitzt, die gegenüber einem Längsträger (12) der Vorrichtung mit einem Metallrahmen (1) angeordnet ist, ein Band (32) aus Verbundwerkstoff besitzt, das gegenüber einem seitlichen Bereich (22) der Dacheinheit (2) angeordnet ist, sowie Stützen (33) aus Verbundwerkstoff besitzt, welche die Front (31) mit dem Band (32) verbinden.

5. Wagenkasten nach Anspruch 4, **dadurch gekennzeichnet, dass** die Front (31) aus Verbundwerkstoff mindestens teilweise im Innern der Vorrichtung mit einem Metallrahmen (1) verläuft.

6. Wagenkasten nach Anspruch 5, **dadurch gekennzeichnet, dass** das Band (32) aus Verbundwerkstoff mindestens teilweise im Innern der Dacheinheit (2) verläuft.

7. Wagenkasten nach einem der Ansprüche 1 bis 6, **dadurch gekennzeichnet, dass** die ausgekleideten Seitenflächen (3) jeweils aus einer Front (31) aus Verbundwerkstoff bestehen, die ein oberes Band (311) besitzt, das gegenüber einer Oberkante (121) der Vorrichtung mit einem Metallrahmen (1) nach außen verläuft, wobei dieses obere Band (311) mit Schrauben (7) an dieser Kante (121) befestigt ist.

8. Wagenkasten nach einem der Ansprüche 1 bis 7, **dadurch gekennzeichnet, dass** die ausgekleideten Seitenflächen (3) Bänder (32) besitzen, die jeweils an einem seitlichen Bereich (22) der Dacheinheit (2) mit Schrauben befestigt sind.

9. Wagenkasten nach einem der Ansprüche 1 bis 6, **dadurch gekennzeichnet, dass** die ausgekleideten Seitenflächen (3) jeweils eine Front (31) aus Verbundwerkstoff besitzen, die ein unteres Band (312) besitzt, das gegenüber einer im stumpfen Winkel gebogenen unteren Seite der Längsträger nach innen verläuft, wobei dieses Band (312) mit Schrauben an dieser unteren Seite befestigt ist.

10. Wagenkasten nach einem der Ansprüche 1 bis 9, **dadurch gekennzeichnet, dass** die ausgekleideten Seitenflächen (3) Türrahmen besitzen.

11. Wagenkasten nach einem der Ansprüche 1 bis 10, **dadurch gekennzeichnet, dass** die ausgekleideten Seitenflächen (3) Sitzhalterungen besitzen.

12. Wagenkasten nach einem der Ansprüche 1 bis 11, **dadurch gekennzeichnet, dass** er Verglasungen (5) besitzt, die an den ausgekleideten Seitenflächen (3) befestigt sind.

13. Wagenkasten nach einem der Ansprüche 1 bis 12, **dadurch gekennzeichnet, dass** er zwischen den Längsträgern (12), die zu der Vorrichtung mit einem Metallrahmen (1) gehören, und den Flächen (31), die zu den ausgekleideten Seitenflächen (3) gehören, Isolierplatten (4) besitzt.

14. Wagenkasten nach einem der Ansprüche 1 bis 13, **dadurch gekennzeichnet, dass** die Vorrichtung mit einem Metallrahmen (1) einen Boden (11) besitzt, der mindestens ein Profil mit mehreren Röhren aus Aluminium oder aus einer Aluminiumlegierung aufweist.

15. Wagenkasten nach einem der Ansprüche 1 bis 14, **dadurch gekennzeichnet, dass** die Vorrichtung mit einem Metallrahmen (1) einen Boden besitzt, der Querträger aus Aluminium oder aus einer Aluminiumlegierung aufweist.

16. Wagenkasten nach einem der Ansprüche 1 bis 15, **dadurch gekennzeichnet, dass** die Vorrichtung mit einem Metallrahmen (1) Längsträger (12) besitzt, die mindestens ein Profil mit mehreren Röhren aus Aluminium oder aus einer Aluminiumlegierung aufweisen.

17. Wagenkasten nach einem der Ansprüche 1 bis 16, **dadurch gekennzeichnet, dass** die Dacheinheit (2) mindestens ein Profil aus mehreren Röhren aus Aluminium oder aus einer Aluminiumlegierung besitzt.

18. Wagenkasten nach einem der Ansprüche 1 bis 17, **dadurch gekennzeichnet, dass** die Vorrichtung mit einem Metallrahmen (1) und die Dacheinheit (2) Profile mit mehreren Röhren besitzen, in denen kleine Vertiefungen (122) verlaufen, welche Muttern (6) für die Befestigung von ausgekleideten Seitenflächen (3) durch Verschrauben aufnehmen.

## Claims

1. A vehicle body, of hybrid structure comprising a metal "frame assembly" (1) of aluminum or aluminum alloy, an aluminum or aluminum alloy "roof assembly" (2), **characterized in that** the frame assembly comprises a floor (11) and two side-sill panels (12) extending from the floor towards the roof assembly (2) in such a manner that the cross-section of the frame assembly (1) is generally U-shaped.

2. A vehicle body according to claim 1, **characterized in that** each of the side-sill panels (12) has a bottom margin at an obtuse angle connected to the floor (11).

3. A vehicle body according to claim 1 or claim 2, **characterized in that** the roof assembly (2) comprises a roof panel presenting a central region (21) and two side regions (22) extending on either side of the central region, the side regions sloping towards the frame assembly (1) and away from the central region (21).

4. A vehicle body according to any one of claims 1 to 3, **characterized in that** each fitted-out face assembly (3) has a face (31) of composite material placed facing a side-sill panel (12) of the frame assembly (1), a strip (32) of composite material placed facing one of the side regions (22) of the roof assembly (2), and uprights (33) of composite material interconnecting the face (31) and the strip (32).

5. A vehicle body according to claim 4, **characterized in that** the face (31) of composite material extends at least in part into the inside of the frame assembly (1).

6. A vehicle body according to claim 5, **characterized in that** the strip (32) of composite material extends at least in part inside the roof assembly (2).

7. A vehicle body according to any one of claims 1 to 6, **characterized in that** the fitted-out face assemblies (3) comprise respective faces (31) of composite material each having an outwardly-directed top flange (311) facing a top edge (121) of the frame assembly (1), said top flange (311) being fixed to said edge (121) by bolts (7).

8. A vehicle body according to any one of claims 1 to 7, **characterized in that** the fitted-out face assemblies (3) have strips (32) each fixed to a corresponding side region (22) of the roof assembly (2) by bolts.

9. A vehicle body according to any one of claims 1 to 6, **characterized in that** the fitted-out face assemblies (3) have faces (31) of composite material each including an inwardly directed bottom flange (312) facing an angled bottom margin of a side-sill panel (12), said flange (312) being fixed to said margin by bolts.

10. A vehicle body according to any one of claims 1 to 9, **characterized in that** the fitted-out face assemblies (3) include door frames.

11. A vehicle body according to any one of claims 1 to 10, **characterized in that** the fitted-out face assemblies (3) include seat supports.

12. A vehicle body according to any one of claims 1 to 11, **characterized in that** it includes glazing (5) fixed to the fitted-out face assemblies (3).

13. A vehicle body according to any one of claims 1 to 12, **characterized in that** it includes insulating panels (4) between the side-sill panels (12) belonging to the frame assembly (1) and the faces (31) belonging to the fitted-out face assemblies (3).

14. A vehicle body according to any one of claims 1 to 13, **characterized in that** the frame assembly (1) includes a floor (11) comprising at least one multi-tube extrusion of aluminum for aluminum alloy.

15. A vehicle body according to any one of claims 1 to 14, **characterized in that** the frame assembly (1) includes a floor comprising cross-members made of aluminum or aluminum alloy.

16. A vehicle body according to any one of claims 1 to 15, **characterized in that** the frame assembly (1) includes side-sill panels (12) comprising at least one multi-tube aluminum or aluminum alloy extrusion.

17. A vehicle body according to any one of claims 1 to 16, **characterized in that** the roof assembly (2) includes at least one multi-tube aluminum or aluminum alloy extrusion.

18. A vehicle body according to any one of claims 1 to 17, **characterized in that** the frame assembly (1) and the roof assembly (2) include multi-tube extrusions having cells (122) extending therein and receiving nut-forming means (6) for enabling the fitted-out face assemblies (3) to be fixed by screw fastening.
